# EUROPEAN PATENT APPLICATION

(11) **EP 3 863 329 A1**
(43) Date of publication of application: **11.08.2021**
(21) Application number: 19879325.9
(22) Date of filing: 28.10.2019
(51) Int. Cl.: H04W 36/06

(54) **CHANNEL MANAGEMENT METHOD, ACCESS POINT, AND STATION**

(30) Priority: 29.10.2018 CN 201811271282
(71) Applicant: Huawei Technologies Co., Ltd., Shenzhen, Guangdong 518129 (CN)
(72) Inventor: WANG, Xuehuan, Shenzhen, Guangdong 518129 (CN); ZHANG, Xingxin, Shenzhen, Guangdong 518129 (CN)
(74) Representative: Gill Jennings & Every LLP
(86) International application number: PCT/CN2019/113668
(87) International publication number: WO 2020/088402

(57) **Abstract**

Embodiments of this application disclose a channel management method, to improve channel utilization. The method in the embodiments of this application includes: establishing, by an access point AP, a communication connection to a station STA; and sending first channel configuration signaling to the STA, where the first channel configuration signaling is used to indicate the STA to perform data transmission on a first channel, and the first channel is a secondary channel of the AP.

## Description

This application claims priority to Chinese Patent Application No. 201811271282.3, filed with the Chinese Patent Office on October 29,2018 and entitled "CHANNEL MANAGEMENT METHOD, ACCESS POINT, AND STATION", which is incorporated herein by reference in its entirety.

### TECHNICAL FIELD

This application relates to the communications field, and in particular, to a channel management method, an access point, and a station.

### BACKGROUND

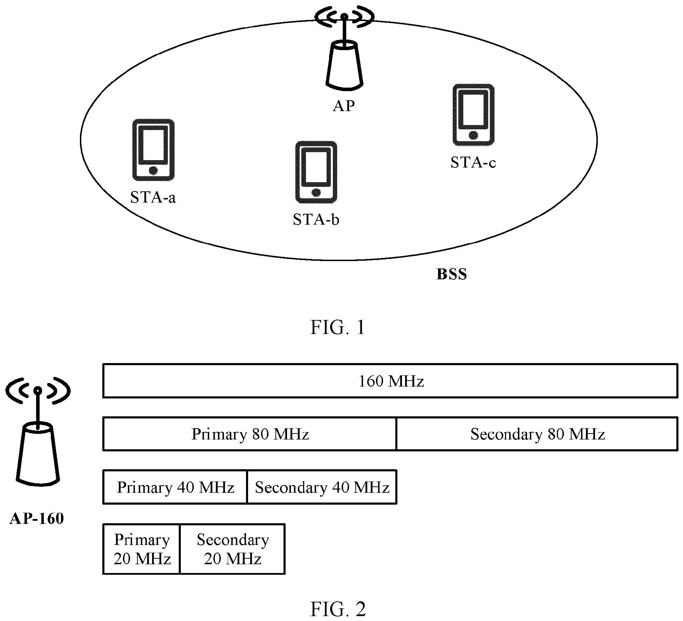

A wireless local area network (wireless local area network, WLAN) basic service set (basic service set, BSS) includes a plurality of WLAN devices. Referring to FIG. 1, one WLAN device is an access point (access point, AP), and other WLAN devices are stations (station, STA). The AP is a management device of the WLAN network BSS, and has a management function, for example, sending a beacon (Beacon) broadcast frame. The STAs are associated with the AP, and transmit services through the AP to communicate with another device.

With development of the wireless local area network universal standard 802.11 protocol, transmission bandwidth supported by the WLAN device is extended from 20 MHz in the conventional 802.11a protocol to 20 MHz, 40 MHz, 80 MHz, and 160 MHz in the 802.11ax protocol. In an evolution process of high-bandwidth transmission, different types of 20 MHz are classified in the 802.11 protocol. Referring to FIG. 2, a 160 MHz channel of an AP in the 802.11ax protocol is used as an example, and the 160 MHz channel includes two consecutive 80 MHz channels. The 160 MHz channel includes eight 20 MHz channels, and one of the eight 20 MHz channels is a primary 20 MHz channel of the AP. The primary 20 MHz channel and another neighboring 20 MHz channel (that is, a secondary 20 MHz channel of the AP) form a primary 40 MHz channel. The primary 40 MHz channel and another consecutive 40 MHz channel (that is, a secondary 40 MHz channel) neighboring to the primary 40 MHz channel form a primary 80 MHz channel, and a remaining consecutive 80 MHz channel is a secondary 80 MHz channel. A STA that supports only 20 MHz bandwidth performs data transmission with the AP only on the primary 20 MHz channel. A STA that supports 40 MHz bandwidth may perform data transmission with the AP on the primary 20 MHz channel or the primary 40 MHz channel. A STA that supports 80 MHz bandwidth may perform data transmission with the AP on the primary 20 MHz channel, the primary 40 MHz channel, or the primary 80 MHz channel. A STA that supports 160 MHz bandwidth may perform data transmission with the AP on the primary 20 MHz channel, the primary 40 MHz channel, the primary 80 MHz channel, or the primary 160 MHz channel. The AP has to send management frames such as a beacon on the primary 20 MHz channel to ensure backward compatibility. Before data transmission is performed between the AP and the STA, a channel needs to be listened on, and transmission is performed when the primary 20 MHz channel of the AP is idle.

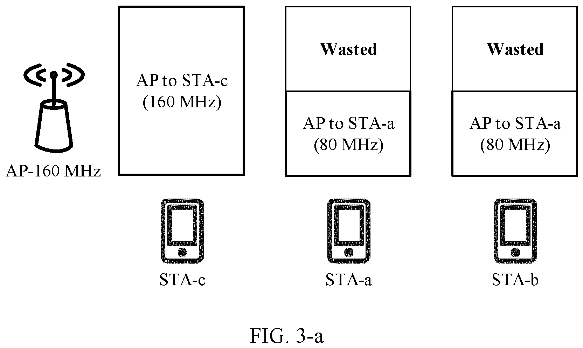

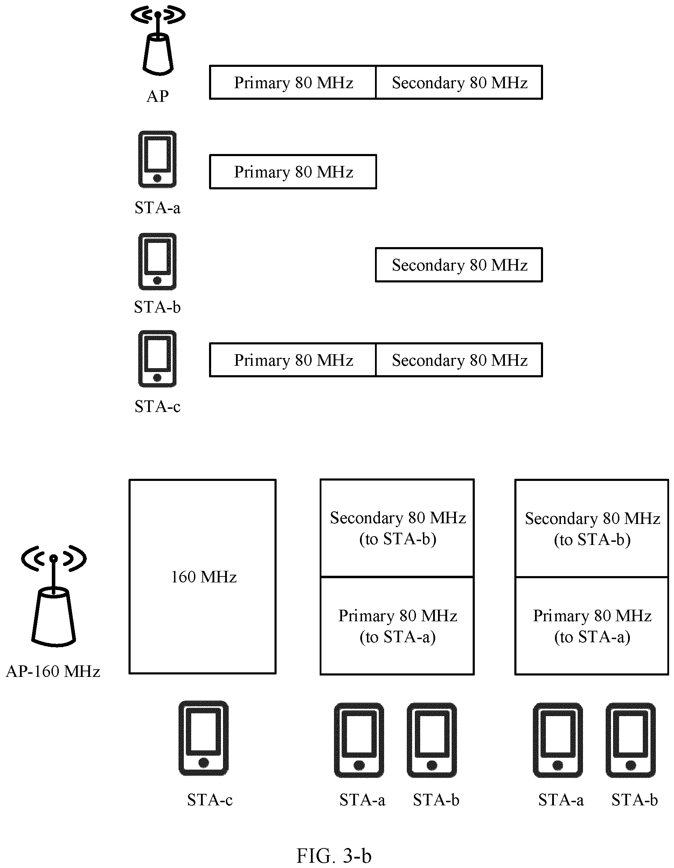

In a current technology, a transmission bandwidth capability of an AP is usually higher than that of a STA. Referring to FIG. 3-a, for example, an AP is associated with three STAs, the AP supports a 160 MHz channel, bandwidth capabilities of a STA-a and a STA-b are each 80 MHz, and a bandwidth capability of a STA-c is 160 MHz. Because the STA needs to perform data transmission on a primary channel, and the STA-a and the STA-b support only an 80 MHz channel, even if the 160 MHz channel is idle, the AP can separately perform data transmission with the STA-a and the STA-b only on the primary 80 MHz channel of the AP in a time division manner. When the STA-a and the STA-b work, only a primary 80 MHz channel is used. Therefore, channel utilization is relatively low.

### SUMMARY

Embodiments of this application provide a channel management method, to improve channel utilization.

A first aspect of the embodiments of this application provides a channel management method. The method includes: establishing, by an access point AP, a communication connection to a station STA; and sending, by the AP, first channel configuration signaling to the STA, where the first channel configuration signaling is used to indicate the STA to perform data transmission on a first channel, and the first channel is a secondary channel of the AP.

The STA is associated with the AP to communicate with another device. First, the AP needs to establish a communication connection to the STA. After accessing a network, the AP may send a first channel configuration instruction to the STA. The first channel configuration instruction may instruct the STA to switch to the first channel to perform data transmission.

According to the channel management method provided in this embodiment of this application, the AP may send the first channel configuration instruction to the STA, to instruct the STA to work on the secondary channel of the AP. Therefore, channel utilization can be improved.

According to the first aspect of the embodiments of this application, in a first implementation of the first aspect of the embodiments of this application, before the sending, by the AP, first channel configuration signaling to the STA, the method further includes: receiving, by the AP, channel configuration information sent by the STA, where the channel configuration information is used to indicate that the STA supports in working on the secondary channel of the AP, or the channel configuration information is used to indicate one or more channels supported by the STA, and the one or more channels supported by the STA include the first channel.

According to the channel management method provided in this embodiment of this application, the AP may determine, based on the channel configuration information sent by the STA, that the STA supports in working on the secondary channel of the AP or the one or more supported channels include the secondary channel of the AP. Therefore, the STA may be configured to perform data transmission on the secondary channel. In this way, channel utilization can be improved.

According to the first aspect of the embodiments of this application or the first implementation of the first aspect of the embodiments of this application, in a second implementation of the first aspect of the embodiments of this application, after the sending, by the AP, first channel configuration signaling to the STA, the method further includes: sending, by the AP, downlink data to the STA over the first channel.

According to the channel management method provided in this embodiment of this application, after sending the first channel configuration signaling to the STA, the AP may send the downlink data to the STA over the first channel. A method for sending downlink data when the STA works on the secondary channel is provided, thereby enhancing implementability of the solution.

According to any one of the first aspect of the embodiments of this application, the first implementation of the first aspect of the embodiments of this application, or the second implementation of the first aspect of the embodiments of this application, in a third implementation of the first aspect of the embodiments of this application, after the sending, by the AP, first channel configuration signaling to the STA, the method further includes: sending, by the AP, scheduling information to the STA over the first channel, where the scheduling information is used to indicate the STA to send uplink data.

According to the channel management method provided in this embodiment of this application, after sending the first channel configuration signaling to the STA, the AP may further send the scheduling information to the STA over the first channel, to indicate the STA to send the uplink data. A method for sending uplink data when the STA works on the secondary channel is provided, thereby enhancing implementability of the solution.

According to any one of the first aspect of the embodiments of this application, or the first implementation of the first aspect of the embodiments of this application to the third implementation of the first aspect of the embodiments of this application, in a fourth implementation of the first aspect of the embodiments of this application, before the sending, by the AP, first channel configuration signaling to the STA, the method further includes: configuring, by the AP, the first channel based on a preset parameter, where the preset parameter includes one or more of a quantity of STAs on a channel, a channel load, a channel duty cycle, an amount of sent data, or a bandwidth capability of a STA.

According to the channel management method provided in this embodiment of this application, the AP may configure the first channel based on one or more of the preset parameters, and may comprehensively consider an actual use status of each channel and the like, to perform channel management on the STA, thereby effectively improving channel utilization.

According to any one of the first aspect of the embodiments of this application, or the first implementation of the first aspect of the embodiments of this application to the fourth implementation of the first aspect of the embodiments of this application, in a fifth implementation of the first aspect of the embodiments of this application, after the sending, by the AP, first channel configuration signaling to the STA, the method further includes: configuring, by the AP, a second channel based on the preset parameter, where the second channel is a primary channel of the AP or a secondary channel of the AP; and sending, by the AP, second channel configuration signaling to the STA, where the second channel configuration signaling is used to indicate the STA to switch to the second channel to perform data transmission.

According to the channel management method provided in this embodiment of this application, the AP may configure the second channel for the STA, and send the second channel configuration signaling to the STA, to indicate the STA to switch to the primary channel or a second secondary channel, thereby increasing diversity of implementation of the solution.

According to any one of the first aspect of the embodiments of this application, or the first implementation of the first aspect of the embodiments of this application to the fifth implementation of the first aspect of the embodiments of this application, in a sixth implementation of the first aspect of the embodiments of this application, after the sending, by the AP, first channel configuration signaling to the STA, the method further includes: receiving, by the AP, a notification message sent by the STA, where the notification message includes channel switching information of the STA; and returning, by the AP, acknowledgment information of the notification message to the STA, where the acknowledgment information is used to trigger the STA to switch a channel.

According to the channel management method provided in this embodiment of this application, the AP may receive the channel switching notification message sent by the STA, and trigger, by returning the acknowledgment message, the STA to switch the channel, thereby increasing diversity of channel switching implementations.

According to the first aspect of the embodiments of this application, in a seventh implementation of the first aspect of the embodiments of this application, the sending, by the AP, first channel configuration signaling to the STA includes: sending, by the AP, information about the first channel and first slot information to the STA, where the first slot information is used to indicate duration for which the STA performs data transmission on the first channel.

According to the channel management method provided in this embodiment of this application, the AP may send the first slot information to the STA, to indicate the duration for which the STA performs data transmission on the first channel, thereby enhancing implementability of the solution.

According to the seventh implementation of the first aspect of the embodiments of this application, in an eighth implementation of the first aspect of the embodiments of this application, the sending, by the AP, first channel configuration signaling to the STA includes: sending, by the AP, the information about the first channel and second slot information to the STA, where the second slot information is used to indicate the duration for which the STA performs data transmission on the first channel and duration for which the STA performs data transmission on a primary channel of the AP.

According to the channel management method provided in this embodiment of this application, the AP may send the information about the first channel and the second slot information to the STA. In this way, the duration for which the STA works on the first channel and the primary channel of the AP can be indicated, so that the STA periodically switches between the first channel and the primary channel of the AP, to reduce signaling interaction and improve data transmission flexibility of the STA.

According to the seventh implementation of the first aspect of the embodiments of this application, in a ninth implementation of the first aspect of the embodiments of this application, the sending, by the AP, first channel configuration signaling to the STA includes: sending, by the AP, information about at least two channels and third slot information to the STA, where the at least two channels include the first channel, and the third slot information is used to indicate duration for which the STA performs data transmission on any one of the at least two channels.

According to the channel management method provided in this embodiment of this application, the AP may indicate a plurality of channels to the STA, and indicate, to the STA by using the third slot information, duration of data transmission performed on each of the plurality of channels, so that the STA periodically switches between the plurality of channels, to reduce signaling interaction and improve data transmission flexibility of the STA.

A second aspect of the embodiments of this application provides a channel management method. The method includes: establishing, by a station STA, a communication connection to an access point AP; receiving, by the STA, first channel configuration signaling sent by the AP; and performing, by the STA, data transmission on a first channel based on the first channel configuration signaling.

According to the channel management method provided in this embodiment of this application, the STA may receive a first channel configuration instruction sent by the AP, and perform data transmission on the first channel. In this way, channel utilization can be improved.

According to the second aspect of the embodiments of this application, in a first implementation of the second aspect of the embodiments of this application, before the receiving, by the STA, first channel configuration signaling sent by the AP, the method further includes: sending, by the STA, channel configuration information to the AP, where the channel configuration information is used to indicate that the STA supports in working on a secondary channel of the AP, or the channel configuration information is used to indicate one or more channels supported by the STA, and the one or more channels supported by the STA include the first channel.

According to the channel management method provided in this embodiment of this application, the STA may send the channel configuration information to the AP, so that the AP determines that the STA supports in working on the secondary channel of the AP or the AP obtains the one or more channels supported by the STA, thereby enhancing implementability of the solution.

According to the second aspect of the embodiments of this application or the first implementation of the second aspect of the embodiments of this application, in a second implementation of the second aspect of the embodiments of this application, the performing, by the STA, data transmission on a first channel based on the first channel configuration signaling includes: receiving, by the STA, downlink data sent by the AP over the first channel.

According to the channel management method provided in this embodiment of this application, after receiving the first channel configuration signaling sent by the AP, the STA may further receive, over the first channel, the downlink data sent by the STA. A method for receiving downlink data when the STA works on the secondary channel of the AP is provided, thereby enhancing implementability of the solution.

According to any one of the second aspect of the embodiments of this application, the first implementation of the second aspect of the embodiments of this application, or the second implementation of the second aspect of the embodiments of this application, in a third implementation of the second aspect of the embodiments of this application, the performing, by the STA, data transmission on a first channel based on the first channel configuration signaling includes: receiving, by the STA, scheduling information sent by the AP over the first channel; and sending, by the STA, uplink data based on the scheduling information.

According to the channel management method provided in this embodiment of this application, after receiving the first channel configuration signaling sent by the AP and working on the secondary channel, the STA may further receive the scheduling information sent by the AP, and send uplink data under triggering of the scheduling information. A method for sending uplink data when the STA works on the secondary channel is provided, thereby enhancing implementability of the solution.

According to any one of the second aspect of the embodiments of this application, the first implementation of the second aspect of the embodiments of this application, or the third implementation of the second aspect of the embodiments of this application, in a fourth implementation of the second aspect of the embodiments of this application, after the receiving, by the STA, first channel configuration signaling sent by the AP, the method further includes: receiving, by the STA, second channel configuration signaling sent by the AP; and switching, by the STA based on the second channel configuration signaling, to a second channel to perform data transmission, where the second channel is a primary channel or a second secondary channel.

According to the channel management method provided in this embodiment of this application, the AP may configure the second channel for the STA, and send the second channel configuration signaling to the STA, to indicate the STA to switch to the primary channel or the second secondary channel, thereby increasing diversity of implementation of the solution.

According to any one of the second aspect of the embodiments of this application, the first implementation of the second aspect of the embodiments of this application, or the fourth implementation of the second aspect of the embodiments of this application, in a fifth implementation of the second aspect of the embodiments of this application, after the receiving, by the STA, first channel configuration signaling sent by the AP, the method further includes: sending, by the STA, a request message to the AP, where the request message carries information about a third channel, and the third channel is a primary channel of the AP or a secondary channel of the AP; and if the STA receives third channel configuration signaling sent by the AP, switching, by the STA, to the third channel to perform data transmission.

According to the channel management method provided in this embodiment of this application, the STA may actively switch a channel. After sending the channel switching request message to the AP, if the STA receives the third channel configuration signaling returned by the AP, the STA may be triggered to switch to the third channel to perform data transmission. Another implementation in which the STA switches a channel is provided, thereby increasing diversity of channel switching implementations.

According to the second aspect of the embodiments of this application, in a sixth implementation of the second aspect of the embodiments of this application, the receiving, by the STA, first channel configuration signaling sent by the AP includes: receiving, by the STA, information about the first channel and first slot information that are sent by the AP, where the first slot information is used to indicate duration for which the STA performs data transmission on the first channel.

According to the channel management method provided in this embodiment of this application, the STA performs data transmission on the first channel based on the duration indicated by the first slot information, thereby improving implementability of the solution.

According to the sixth implementation of the second aspect of the embodiments of this application, in a seventh implementation of the second aspect of the embodiments of this application, the receiving, by the STA, first channel configuration signaling sent by the AP includes: receiving, by STA, the information about the first channel and second slot information that are sent by the AP, where the second slot information is used to indicate the duration for which the STA performs data transmission on the first channel and duration for which the STA performs data transmission on a primary channel of the AP.

According to the channel management method provided in this embodiment of this application, the STA receives the information about the first channel and the second slot information. The second slot information may indicate the duration for which the STA works on the first channel and the primary channel of the AP, so that the STA may periodically switch between the first channel and the primary channel of the AP, to reduce signaling interaction and improve data transmission flexibility of the STA.

According to the sixth implementation of the second aspect of the embodiments of this application, in an eighth implementation of the second aspect of the embodiments of this application, the receiving, by the STA, first channel configuration signaling sent by the AP includes: receiving, by the STA, information about at least two channels and third slot information that are sent by the AP, where the at least two channels include the first channel, and the third slot information is used to indicate duration for which the STA performs data transmission on any one of the at least two channels.

According to the channel management method provided in this embodiment of this application, the first channel configuration signaling may indicate a plurality of channels, and duration of data transmission performed on each of the plurality of channels is indicated by using the third slot information, so that the STA periodically switches between the plurality of channels, to reduce signaling interaction and improve data transmission flexibility of the STA.

A third aspect of the embodiments of this application provides an access point AP. The AP has a function of implementing the channel management method in the first aspect.

A fourth aspect of the embodiments of this application provides a station STA. The STA has a function of implementing the channel management method in the second aspect.

A fifth aspect of the embodiments of this application provides a communications device. The communications device has a function of implementing the traffic management method in the first aspect.

A sixth aspect of the embodiments of this application provides a communications device. The communications device has a function of implementing the traffic management method in the second aspect.

A seventh aspect of the embodiments of this application provides a computer program product. The computer program product includes a computer program instruction, and the computer program instruction may be loaded by a processor to implement the method in the first aspect and the implementations of the first aspect.

An eighth aspect of the embodiments of this application provides a computer program product. The computer program product includes a computer program instruction, and the computer program instruction may be loaded by a processor to implement the method in the second aspect and the implementations of the second aspect.

A ninth aspect of the embodiments of this application provides a computer readable storage medium. The computer readable storage medium is configured to store computer program instructions, and the computer program instructions include a program used to perform the steps provided in the implementations of the first aspect of the embodiments of this application.

A tenth aspect of the embodiments of this application provides a computer readable storage medium. The computer readable storage medium is configured to store computer program instructions, and the computer program instructions include a program used to perform the steps provided in the implementations of the second aspect of the embodiments of this application.

It can be learned from the foregoing technical solutions that the embodiments of this application have the following advantages: The AP may send a channel configuration instruction to the STA, to instruct the STA to work on the secondary channel. Therefore, channel utilization can be improved.

### BRIEF DESCRIPTION OF DRAWINGS

FIG. 1 is a schematic diagram of a wireless local area network basic service set;
FIG. 2 is a schematic diagram of channel division;
FIG. 3-a is a schematic diagram of association between an AP and a STA;
FIG. 3-b is a schematic diagram of an embodiment of association between an AP and a STA according to an embodiment of this application;

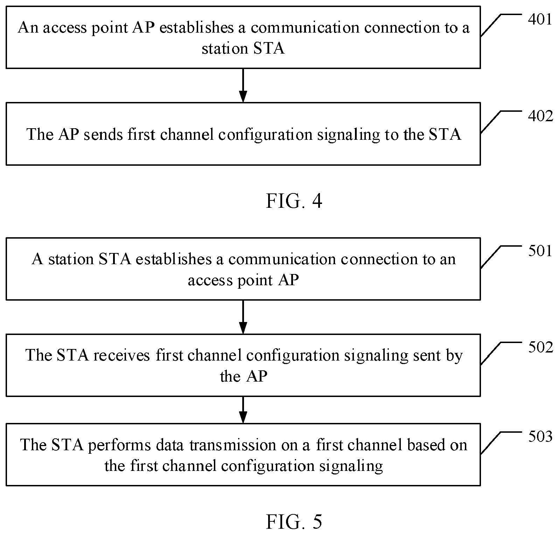

FIG. 4 is a schematic diagram of an embodiment of a channel management method according to an embodiment of this application;
FIG. 5 is a schematic diagram of another embodiment of a channel management method according to an embodiment of this application;

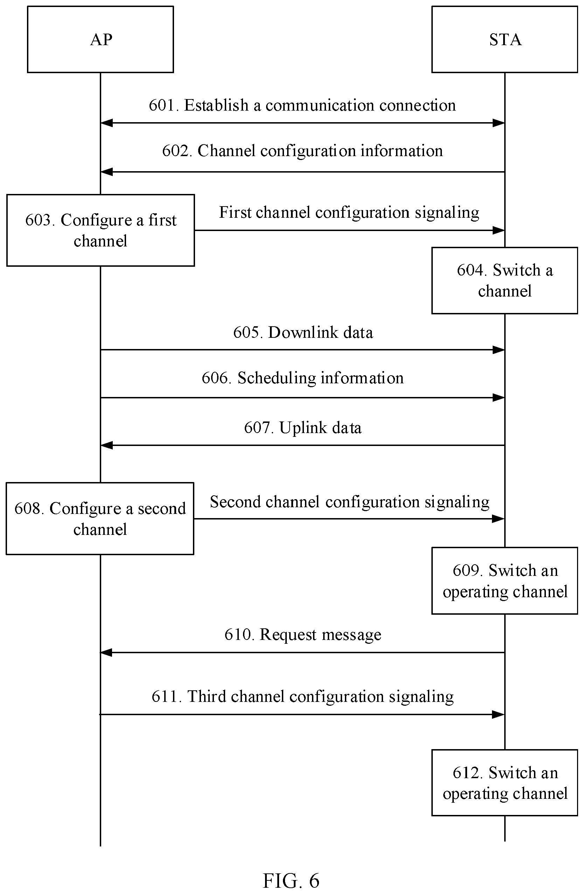

FIG. 6 is a schematic diagram of an interaction embodiment of a channel management method according to an embodiment of this application;

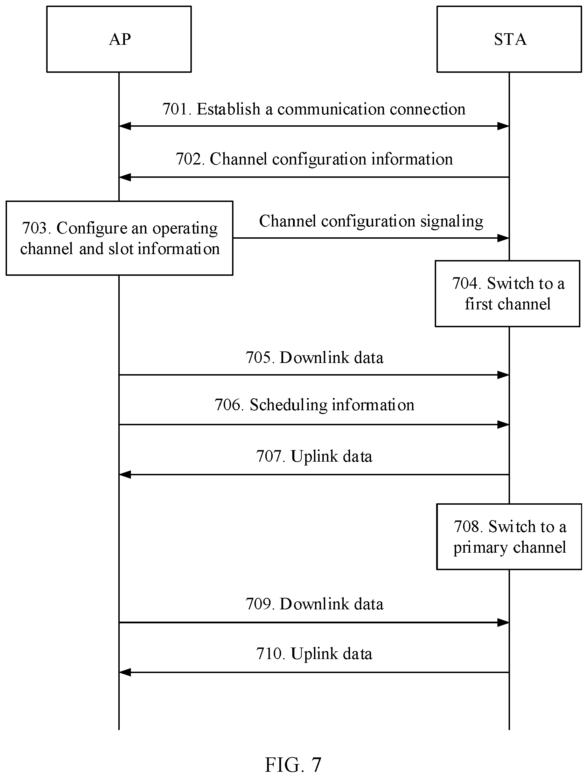

FIG. 7 is a schematic diagram of another interaction embodiment of a channel management method according to an embodiment of this application;

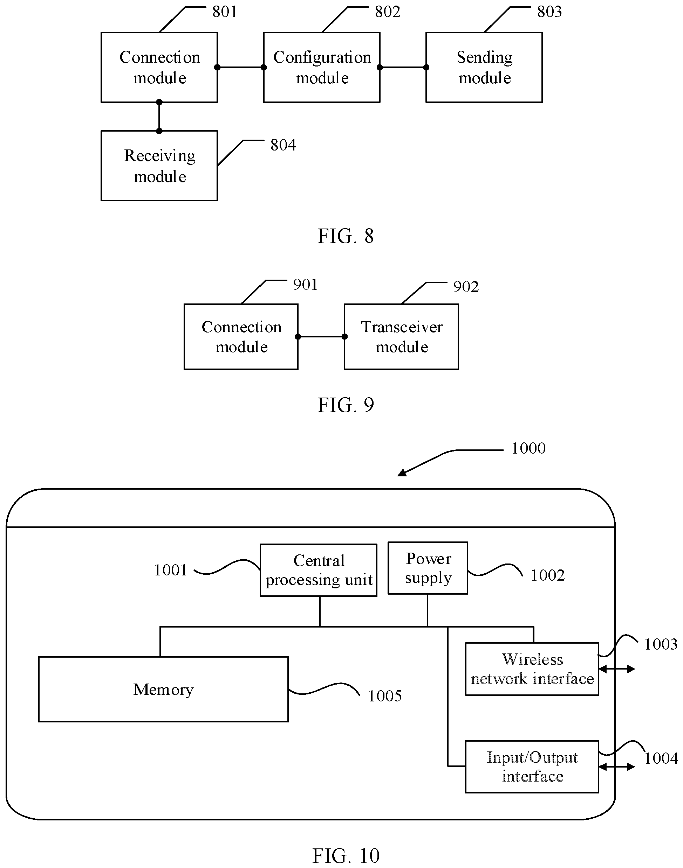

FIG. 8 is a schematic diagram of an embodiment of an access point according to an embodiment of this application;
FIG. 9 is a schematic diagram of an embodiment of a station according to an embodiment of this application;
FIG. 10 is a schematic diagram of another embodiment of an access point according to an embodiment of this application; and

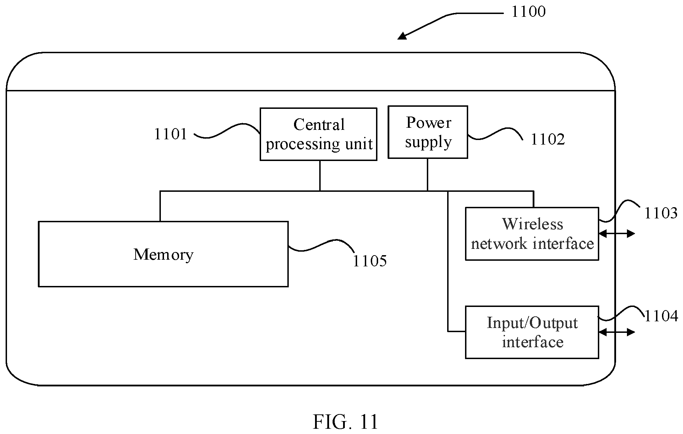

FIG. 11 is a schematic diagram of another embodiment of a station according to an embodiment of this application.

### DESCRIPTION OF EMBODIMENTS

Embodiments of this application provide a channel management method, to improve channel utilization.

The channel management method provided in the embodiments of this application is applied to a plurality of communication connection scenarios, including a WLAN system, a licensed-assisted access (License Assisted Access, LAA) system, an unlicensed spectrum (Multefire) communications system, and the like. In the following embodiments, a channel management method in the WLAN system is used as an example for description.

FIG. 3-b is a schematic diagram of an embodiment of association between an AP and a STA according to an embodiment of this application.

According to the channel management method provided in this application, after establishing a communication connection to the AP, the STA may switch, based on channel configuration signaling sent by the AP, to a secondary channel of the AP to perform data transmission. In this way, channel utilization can be improved.

For example, referring to FIG. 3-b, an AP of a 160 MHz channel is associated with three STAs: a STA-a whose bandwidth capability is 80 MHz, a STA-b whose bandwidth capability is 80 MHz, and a STA-c whose bandwidth capability is 160 MHz. If the AP sends, after the STA-b establishes a communication connection to the AP, channel configuration signaling to the STA-b to indicate the STA-b to switch to a secondary 80 MHz channel to perform data transmission, the AP may transmit data of the STA-a on a primary 80 MHz channel and may also transmit data of the STA-b on the secondary 80 MHz channel when monitoring that the 160 MHz channel is idle. In addition, when the 160 MHz channel is idle, the AP may further transmit data of the STA-c on both the primary 80 MHz channel and the secondary 80 MHz channel. According to the channel management method provided in this embodiment of this application, a secondary channel resource of the AP can be effectively used, and channel utilization can be improved.

Based on the schematic diagram of the wireless local area network basic service set provided in FIG. 1, FIG. 4 is a schematic diagram of an embodiment of a channel management method according to an embodiment of this application.

401. An access point AP establishes a communication connection to a station STA.

Because the STA needs to communicate with another device through the AP, first, the AP needs to establish a communication connection to the STA, and the communication connection may be established between the AP and the STA through network scanning. The STA may establish a connection to the AP through active scanning, or may establish a connection to the AP by listening to a beacon frame sent by the AP. The STA may further obtain configuration information of primary and secondary channels of the AP via the communication connection by using a signaling message. The STA transmits network access signaling on the primary channel of the AP to complete network access.

402. The AP sends first channel configuration signaling to the STA.

The AP sends the first channel configuration signaling to the STA, to indicate the STA to work on a first channel, that is, to perform data transmission on the first channel. The first channel is the secondary channel of the AP. The first channel configuration signaling may carry information, configured by the AP for the STA, about the first channel, for example, a center frequency and bandwidth of the first channel. In addition, the first channel configuration signaling may further include a start moment, and the start moment is used to indicate a moment at which the STA starts to perform data transmission on the configured first channel.

According to the channel management method provided in this embodiment of this application, the AP may complete, on the primary channel, a process of connecting to the STA for accessing a network, and then send the first channel configuration signaling to the STA to indicate the STA to switch to the secondary channel of the AP for working. Because the STA may switch to the secondary channel of the AP to work, the AP may separately perform data transmission with different STAs on the primary channel and the secondary channel at a same moment. Therefore, channel utilization can be improved.

Based on the schematic diagram of the wireless local area network basic service set provided in FIG. 1, FIG. 5 is a schematic diagram of another embodiment of a channel management method according to an embodiment of this application.

501. A station STA establishes a communication connection to an access point AP.

Because the STA needs to communicate with another device through the AP, first, the STA needs to establish a communication connection to the AP, and the communication connection may be established between the AP and the STA through network scanning. The STA may establish a connection to the AP through active scanning, or may establish a connection to the AP by listening to a beacon frame sent by the AP. The STA may further obtain configurations of primary and secondary channels of the AP via the communication connection by using a signaling message. The STA transmits network access signaling on the primary channel of the AP to complete network access.

502. The STA receives first channel configuration signaling sent by the AP.

After establishing the communication connection to the AP, the STA may receive the first channel configuration signaling sent by the AP. The first channel configuration signaling carries information about a first channel, and is used to indicate the STA to switch to the first channel to work, that is, perform data transmission on the first channel. The first channel is the secondary channel of the AP.

503. The STA performs data transmission on the first channel based on the first channel configuration signaling.

The STA switches to the secondary channel based on the first channel configuration signaling sent by the AP, to perform data transmission.

According to the channel management method provided in this embodiment of this application, the STA may complete communication connection to the AP on the primary channel, then receive the first channel configuration signaling sent by the AP, and switch to the secondary channel of the AP to work. Because the STA may switch to the secondary channel of the AP to work, channel utilization can be improved.

Based on the schematic diagram of the wireless local area network basic service set provided in FIG. 1, FIG. 6 is a schematic diagram of an interaction embodiment of a channel management method according to an embodiment of this application.

601. An AP establishes a communication connection to a STA.

First, the AP may establish a communication connection to the STA through network scanning. There are a plurality of network scanning manners:

Optionally, in an active scanning mode, the STA sends a probe request (probe request) frame to the AP. After receiving the probe request, the AP sends a probe response (probe response) frame to the STA.

Optionally, in a passive scanning mode, the STA obtains, through listening, a beacon (beacon) frame periodically sent by the AP.

The STA may determine configuration information of a primary channel and a secondary channel of the AP by using the probe response or the beacon message sent by the AP. The STA transmits network access signaling on the primary channel of the AP to complete network access, where the network access signaling includes signaling involved in processes such as authentication and association.

602. The STA sends channel configuration information to the AP.

The STA sends the channel configuration information to the AP.

Optionally, the channel configuration information is used to indicate that the STA supports in performing data transmission on the secondary channel of the AP. For example, the channel configuration information includes a field indicating whether the STA supports an operating channel configuration. For example, 1 indicates that the STA supports the operating channel configuration, and 0 indicates that the STA does not support the operating channel configuration. The STA may send both the channel configuration information and bandwidth capability information of the STA to the AP, or may separately send the channel configuration information of the STA to the AP. A specific manner in which the STA sends the channel configuration information to the AP is not limited herein.

Optionally, for a STA that does not send channel configuration information to the AP, the AP considers by default that the STA does not support the operating channel configuration.

Optionally, the channel configuration information is used to indicate one or more channels supported by the STA, and the one or more channels supported by the STA include the first channel. For example, the STA sends the one or more channels supported by the STA to the AP, where the one or more channels include the first channel, and the first channel is a secondary channel.

It should be noted that operating channel adjustment involves adjustment of a software configuration such as a state machine and adjustment of a hardware parameter such as a filter parameter, and whether the STA supports working on the secondary channel of the AP is determined by a software and hardware processing capability of the STA. In this embodiment of this application, only the STA that supports in working on the secondary channel of the AP is involved. Therefore, the STA sends the channel configuration information to the AP, where the channel configuration information indicates that the STA supports in performing data transmission on the secondary channel of the AP, or the channel configuration information is used to indicate the one or more channels supported by the STA, and the one or more channels supported by the STA include the first channel.

603. The AP configures the first channel for the STA, and sends first channel configuration signaling to the STA.

After receiving the channel configuration information sent by the STA in step 602, the AP may configure the first channel for the STA. The first channel configured by the AP for the STA is determined by one or more of the following factors: a quantity of STAs on each bandwidth of the AP, a load, a duty cycle, an amount of sent data, or a bandwidth capability of a STA. In actual application, a channel configured by the AP for the STA may be a primary channel or a secondary channel. In this embodiment of this application, that the configured first channel is a secondary channel is used as an example for description.

After configuring the first channel for the STA, the AP sends the first channel configuration signaling to the STA, where the signaling is used to indicate the STA to perform data transmission on the first channel. The first channel configuration signaling includes the configured first channel. In addition, the first channel configuration signaling may further include a start moment, and the start moment is used to indicate a moment at which the STA starts to perform transmission on the configured first channel.

604. The STA switches a channel.

After receiving the first channel configuration signaling, the STA configures an operating channel based on an indication of the signaling. Because the first channel is a secondary channel, the STA performs channel switching to switch from the primary channel of the AP to the first channel to perform data transmission.

605. The AP sends downlink data to the STA.

The AP sends the downlink data to the STA over the first channel, in other words, the STA may receive, on the first channel, the downlink data sent by the AP. It may be understood that, because the first channel is a secondary channel, the STA and another STA that works on the primary channel of the AP may simultaneously receive the downlink data sent by the AP.

It should be noted that step 605 is an optional step, and step 605 may or may not be performed. This is not limited herein, and depends on an actual working status of the STA. In addition, step 605 may be performed after step 604, and an execution sequence and a quantity of execution times of step 605 are not limited.

606. The AP sends scheduling information to the STA.

Because the STA works on the secondary channel, to avoid a data transmission conflict with a STA that works on the primary channel or another secondary channel, uplink data transmission of the STA needs to be scheduled by the AP. The AP sends the scheduling information to the STA over the first channel, to indicate the STA to perform uplink data transmission. Optionally, the scheduling information carries channel information and slot information. The channel information is used to indicate a channel used by the STA to send uplink data. The channel may be the first channel, the primary channel, or another secondary channel of the AP other than the first channel. This is not limited herein. The slot information is used to indicate duration for which the STA sends the uplink data.

607. The STA sends the uplink data to the AP.

After receiving the scheduling information sent by the AP, the STA may send the uplink data to the AP based on the scheduling information. The scheduling information indicates that the channel used by the STA to send the uplink data may be a primary channel of the AP or a secondary channel of the AP. This is not limited herein.

It should be noted that step 606 and step 607 are optional steps, and may or may not be performed. This is not limited herein.

In addition, an execution sequence of step 606 to step 607 and step 605 is not limited. Step 605 may be performed first, and then step 606 to step 607 are performed. Alternatively, step 606 to step 607 may be performed first, and then step 605 is performed. This is not limited herein. In addition, steps 606 and 607 may be performed when the STA works on the secondary channel, and an execution occasion and a quantity of execution times of steps 606 and 607 are not limited.

The STA switches an operating channel. The STA may actively perform switching, or the STA may be scheduled by the AP to perform switching. The two cases are separately described below. Step 608 and step 609 are a process in which the AP schedules the STA to perform switching, and step 610 to step 612 are a process in which the STA actively requests to perform switching.

608. The AP configures a second operating channel for the STA, and sends second operating channel configuration signaling to the STA.

The AP may reconfigure the operating channel for the STA. The second operating channel configured by the AP for the STA is determined by one or more of the following factors: a quantity of STAs on each bandwidth of the AP, a load, a duty cycle, an amount of sent data, or a bandwidth capability of a STA. "Second" is only used to refer to a specific operating channel, and "second" and "first" do not indicate any order or magnitude.

The second operating channel may be a primary channel of the AP or a secondary channel of the AP. This is not limited herein. Optionally, if a channel on which the STA currently works is a primary channel, the second operating channel configured by the AP may be any secondary channel; or if a channel on which the STA currently works is a secondary channel, the second operating channel configured by the AP may be a primary channel or another secondary channel. For example, if the STA switches the operating channel to a first secondary channel of the AP in step 604, the second operating channel configured by the AP may be a primary channel of the AP or a second secondary channel of the AP.

After configuring the second operating channel for the STA, the AP sends the second operating channel configuration signaling to the STA, where the signaling is used to indicate the STA to perform data transmission on the second operating channel. The second operating channel configuration signaling includes the configured second operating channel. In addition, the second operating channel configuration signaling may further include a start moment, and the start moment is used to indicate a moment at which the STA starts to perform transmission on the configured second channel.

609. The STA switches the operating channel.

After receiving the second operating channel configuration signaling, the STA performs channel switching based on an indication of the signaling. Herein, a type of the operating channel set by the STA is not limited. For example, the STA may switch to the secondary channel to perform data transmission.

It should be noted that step 608 and step 609 are optional steps, and may or may not be performed. This is not limited herein.

610. The STA sends a request message to the AP.

When the STA needs to switch a channel, the STA may send a request message to the AP, where the request message is used to request to switch an operating channel of the STA.

Optionally, the request message carries target channel information, and the target channel information is used to request the AP to switch the STA to the target channel. For example, if the STA performs data transmission on the first channel based on a configuration of the AP, when the STA needs to switch to the second channel, the STA may send a request message to the AP, where the request message carries second channel information. The second channel may be a primary channel of the AP, or may be a secondary channel of the AP. This is not limited herein. A manner of carrying the target channel information may be carrying a bandwidth and a center frequency of the target channel. This is not specifically limited herein.

Optionally, if the request message does not carry target channel information, the STA may request the AP to configure an operating channel for the STA. For example, if the STA works on the first channel based on the configuration of the AP, the STA may send the request message to the AP, to request to switch to another channel to perform data transmission.

611. The AP sends third channel configuration signaling to the STA.

After receiving the request message, that is, a channel switching request, sent by the STA, the AP may send the third channel configuration signaling to the STA.

Optionally, if the request message sent by the STA carries target channel information, the AP may return a response message of the request message, where the response message carries an adjustment indication. When the adjustment indication is that adjustment is not allowed, the channel switching request of the STA is rejected, and a channel configuration is not changed. When the adjustment indication is that adjustment is allowed, the response message may further include newly configured channel information.

Optionally, if the request message sent by the STA does not carry target channel information, the AP may configure a new operating channel, that is, a third channel, for the STA based on the request message. Then, the AP may send third channel configuration signaling to the STA, where the third channel configuration signaling carries third channel information. A manner of carrying the third channel information may be carrying a bandwidth and a center frequency of the third channel, and a specific form of sending the third channel information is not limited herein. If the AP rejects the channel switching request of the STA, the AP returns a reject message to the STA.

In this embodiment of this application, an example in which the AP allows the STA to switch to the third channel is used for description.

612. The STA switches the operating channel.

After the STA sends the request message to the AP, if the STA receives the third channel configuration signaling sent by the AP, the STA may switch the operating channel. For example, the STA switches from a secondary channel to a primary channel, or switches from a secondary channel to another secondary channel, or switches from a primary channel to a secondary channel. This is not limited herein. In this embodiment of this application, an example in which the STA switches from a secondary channel to a primary channel is used for description.

If the STA switches to the primary channel, the STA may listen to a channel according to a listen before talk (listen before talk, LBT) spectrum etiquette, and then send data.

It should be noted that step 610 to step 612 are optional steps, and may or may not be performed. This is not limited herein.

According to the channel management method provided in this embodiment of this application, after the STA completes access on the primary channel, if the AP determines that the STA supports in performing data transmission on the secondary channel of the AP, the AP may configure, by using channel configuration signaling, the STA to work on the secondary channel. In addition, the STA may perform channel switching or perform channel switching again by using the channel configuration signaling sent by the AP. The STA may receive downlink data on the secondary channel, and may further send uplink data under triggering of the scheduling information of the AP. Therefore, in the solution in this embodiment of this application, channel utilization of the secondary channel of the AP can be improved.

Based on the schematic diagram of the wireless local area network basic service set provided in FIG. 1,

FIG. 7 is a schematic diagram of another interaction embodiment of a channel management method according to an embodiment of this application.

701. An AP establishes a communication connection to a STA.

702. The STA sends channel configuration information to the AP.

Step 701 and step 702 are similar to step 601 and step 602 in the embodiment corresponding to FIG. 6, and details are not described herein again.

703. The AP configures an operating channel and slot information, and sends channel configuration signaling to the STA.

The AP determines, by receiving the channel configuration information sent by the STA, whether the STA supports in working on a secondary channel of the AP. In this embodiment of this application, an example in which the STA supports in working on the secondary channel of the AP is used for description.

A channel configured by the AP for the STA includes first channel information. The AP further configures first slot information, where the first slot information is used to indicate duration for which the STA performs data transmission on the first channel.

Optionally, the AP may configure a first channel for the STA, where the first channel is a secondary channel of the AP. In addition, the AP further configures first slot information for the STA, where the first slot information is used to indicate duration for which the STA performs data transmission on the first channel, and the first slot information is further used to indicate duration for which the STA performs data transmission on a primary channel of the AP.

For example, referring to the following table, the first slot information includes a period indication field, a secondary channel duration field, and a primary channel duration field. A size of the period indication field is 1 bit. 0 indicates that the STA is always working on the secondary channel, and 1 indicates that the STA periodically switches to the primary channel for transmission. The secondary channel duration field is duration of working on the secondary channel for a single time, and a minimum time unit may be 1 millisecond. When the period indication field is 0, the field is set to a special value, for example, 0, indicating that the STA continuously works on the secondary channel. The primary channel duration field is duration of working on the primary channel for a single time, and a minimum unit may be 1 millisecond. When a value of period indication field is 0, this field does not exist.

| | | |
|---|---|---|
| Period indication field | Secondary channel duration field | Primary channel duration field |

Optionally, the AP configures at least two operating channels for the STA, and sends information about the at least two channels and third slot information to the STA, where the at least two channels include the first channel, and the third slot information is used to indicate duration for which the STA performs data transmission on any one of the at least two channels. For example, the AP may configure two different channels, for example, a first channel and a second channel, for the STA. The second channel may be a primary channel of the AP or may be a secondary channel of the AP. This is not limited herein. The third slot information is used to indicate duration for which the STA performs data transmission on the first channel, and is further used to indicate duration for which the STA performs data transmission on the second channel. The STA may periodically switch between a first secondary channel and a second secondary channel based on an indication of the AP.

704. The STA switches to the first channel.

The STA performs channel switching based on a received operating channel and slot information. The STA may switch to the first channel to perform data transmission, and operating duration may be determined based on a preset first channel duration field in the slot information.

705. The STA receives downlink data sent by the AP.

706. The STA receives scheduling information sent by the AP.

707. The STA sends uplink data to the AP.

Step 705 to step 707 are similar to step 605 to step 607 in the embodiment corresponding to FIG. 6, and details are not described herein again.

It should be noted that an execution sequence of step 705 and steps 706 to 707 is not limited.

Step 704 to step 707 are a data transmission process after the STA switches to the secondary channel, and step 708 to step 710 are a data transmission process after the STA switches to the primary channel. It should be noted that an execution sequence of step 704 to step 707 and step 708 to step 710 is not limited.

708. The STA switches to the primary channel.

The STA performs channel switching based on a received operating channel and slot information. The STA may switch to the primary channel to perform data transmission, and operating duration may be determined based on a preset primary channel duration field in the slot information.

709. The STA receives downlink data sent by the AP.

After the STA switches to the primary channel, the STA may receive, on the primary channel, the downlink data sent by the AP.

710. The STA sends uplink data to the AP.

When the STA works on the primary channel, the STA may listen to a channel according to a listen before talk (listen before talk, LBT) spectrum etiquette, and then send data.

It should be noted that an execution sequence of step 709 and step 710 is not limited.

According to the channel management method provided in this embodiment of this application, after the STA completes access on the primary channel, if the AP determines that the STA supports in working on the secondary channel of the AP, the AP may indicate, by sending the operating channel and the slot information to the STA, the STA to periodically switch between the primary channel and the secondary channel, or to periodically switch between a plurality of channels. This solution can reduce signaling interaction and increase flexibility of uplink transmission of the STA. Because the STA may periodically work on the secondary channel, in the solution in this embodiment of this application, channel utilization of the secondary channel can be improved.

The following describes an access point and a station for implementing a channel management method. FIG. 8 is a schematic diagram of an embodiment of an access point according to an embodiment of this application.

The access point may be a device, such as a router or a long term evolution base station (evolved node B, eNB), connected to user equipment by using a radio channel. This is not specifically limited herein.

The access point includes:
a connection module 801, configured to establish a communication connection to a station STA; and
a sending module 803, configured to send first channel configuration signaling to the STA, where the first channel configuration signaling is used to indicate the STA to perform data transmission on a first channel, and the first channel is a secondary channel of the AP.

The AP further includes:
a receiving module 804, where the AP receives channel configuration information sent by the STA, where the channel configuration information is used to indicate that the STA supports in performing data transmission on the secondary channel of the AP, or the channel configuration information is used to indicate one or more channels supported by the STA, and the one or more channels supported by the STA include the first channel.

The sending module 803 is further configured to send downlink data to the STA over the first channel.

The sending module 803 is further specifically configured to: after the AP sends the first channel configuration signaling to the STA, send scheduling information to the STA over the first channel, where the scheduling information is used to indicate the STA to send uplink data.

The STA further includes:
a configuration module 802, configured to: before the AP sends the first channel configuration signaling to the STA, configure the first channel based on a preset parameter, where the preset parameter includes one or more of a quantity of STAs on a channel, a channel load, a channel duty cycle, an amount of sent data, or a bandwidth capability of a STA.

The configuration module 802 is further configured to: after the AP sends the first channel configuration signaling to the STA, configure a second channel based on the preset parameter, where the second channel is a primary channel of the AP or a secondary channel of the AP.

The sending module 803 is further configured to send second channel configuration signaling to the STA, where the second channel configuration signaling is used to indicate the STA to switch to the second channel to perform data transmission.

The receiving module 804 is further configured to receive a request message sent by the STA.

The configuration module 802 is further configured to configure a third channel for the STA based on the request message, where the third channel is a primary channel of the AP or a secondary channel of the AP.

The sending module 803 is further configured to send third channel configuration signaling to the STA, where the third channel configuration signaling is used to indicate the STA to switch to the third channel to perform data transmission.

The sending module 803 is specifically configured to send information about the first channel and first slot information to the STA, where the first slot information is used to indicate duration for which the STA performs data transmission on the first channel.

The sending module 803 is specifically configured to send the information about the first channel and second slot information to the STA, where the second slot information is used to indicate the duration for which the STA performs data transmission on the first channel and duration for which the STA performs data transmission on a primary channel of the AP.

The sending module 803 is specifically configured to send information about at least two channels and third slot information to the STA, where the at least two channels include the first channel, and the third slot information is used to indicate duration for which the STA performs data transmission on any one of the at least two channels.

According to the access point provided in this embodiment of this application, the connection module 801 may complete, on the primary channel, a process of connecting to the STA for accessing a network, and then send channel configuration signaling to the STA by using the sending module 803, to indicate the STA to switch to the secondary channel to work. Because the STA not only may work on the primary channel, but also may switch to the secondary channel to work, channel utilization can be improved.

FIG. 9 is a schematic diagram of an embodiment of a station according to an embodiment of this application.

The station may be user equipment (user equipment, UE), including but not limited to a device, such as a smartphone, a personal computer, a tablet, a smart television, or a wearable device, that can be connected to a network for communication.

The station STA includes:
a connection module 901, configured to establish a communication connection to an access point AP; and
a transceiver module 902, configured to receive first channel configuration signaling sent by the AP.

The transceiver module 902 is further configured to perform data transmission on a first channel based on the first channel configuration signaling, where the first channel is a secondary channel of the AP.

The transceiver module 902 is further configured to: before the STA receives the first channel configuration signaling sent by the AP, send channel configuration information to the AP, where the channel configuration information is used to indicate that the STA supports in performing data transmission on the secondary channel of the AP, or the channel configuration information is used to indicate one or more channels supported by the STA, and the one or more channels supported by the STA include the first channel.

The transceiver module 902 is specifically configured to receive downlink data sent by the AP over the first channel.

The transceiver module 902 is further configured to: receive scheduling information sent by the AP, and send uplink data based on the scheduling information.

The transceiver module 902 is further configured to: receive second channel configuration signaling sent by the AP; and
switch, based on the second channel configuration signaling, to a second channel to perform data transmission, where the second channel is a primary channel of the AP or a secondary channel of the AP.

The transceiver module 902 is further configured to send a request message to the AP, where the request message carries information about a third channel, and the third channel is a primary channel of the AP or a secondary channel of the AP; and if the STA receives third channel configuration signaling sent by the AP, switch to the third channel to perform data transmission.

The transceiver module 902 is specifically configured to receive information about the first channel and first slot information that are sent by the AP, where the first slot information is used to indicate duration for which the STA performs data transmission on the first channel.

The transceiver module 902 is specifically configured to receive the information about the first channel and second slot information that are sent by the AP, where the second slot information is used to indicate the duration for which the STA performs data transmission on the first channel and duration for which the STA performs data transmission on a primary channel of the AP.

The transceiver module 902 is specifically configured to receive information about at least two channels and third slot information that are sent by the AP, where the at least two channels include the first channel, and the third slot information is used to indicate duration for which the STA performs data transmission on any one of the at least two channels.

According to the station provided in this embodiment of this application, the connection module 901 may implement the communication connection to the AP on the primary channel. Then, operating channel configuration signaling sent by the AP is received by using the transceiver module 902, and data transmission is performed after the STA switches to the secondary channel. Therefore, channel utilization can be improved.

The access point described in the embodiments of this application may be a router, an eNodeB, or the like. This is not specifically limited herein. FIG. 10 is a schematic diagram of another embodiment of an access point according to an embodiment of this application.

The access point 1000 may have a relatively large difference due to different configurations or performance, and may include one or more central processing units (central processing units, CPU) 1001 (for example, one or more processors) and a memory 1005. The memory 1005 stores data or one or more application programs.

The memory 1005 may be a volatile memory or a persistent memory. The one or more programs stored in the memory 1005 may include one or more modules, and each module may include a series of instruction operations for the access point. Further, the central processing unit 1001 may be configured to: communicate with the memory 1005, and perform, on the access point 1000, a series of instruction operations in the memory 1005.

The access point 1000 may further include one or more power supplies 1002, one or more wireless network interfaces 1003, one or more input/output interfaces 1004, and/or one or more operating systems such as Windows Server™, Mac OS X™, Unix™, Linux™, and FreeBSD™.

A procedure executed by the central processing unit 1001 in the access point 1000 in this embodiment is similar to the method procedures described in the embodiments shown in FIG. 4, FIG.6, and FIG. 7. Details are not described herein again.

The station described in the embodiments of this application may be user equipment, and includes but is not limited to a device, such as a smartphone, a personal computer, a tablet computer, a smart television, or a wearable device, that can be connected to a network for communication. This is not specifically limited herein. FIG. 11 is a schematic diagram of another embodiment of a station according to an embodiment of this application.

The station 1100 may have a relatively large difference due to different configurations or performance, and may include one or more central processing units (central processing units, CPU) 1101 (for example, one or more processors) and a memory 1105. The memory 1105 stores data or one or more application programs.

The memory 1105 may be a volatile memory or a persistent memory. The programs stored in the memory 1105 may include one or more modules, and each module may include a series of instruction operations for the station. Further, the central processing unit 1101 may be configured to: communicate with the memory 1105, and perform, on the station 1100, a series of instruction operations in the memory 1105.

The station 1100 may further include one or more power supplies 1102, one or more wireless network interfaces 1103, one or more input/output interfaces 1104, and/or one or more operating systems such as Windows Server™, Mac OS X™, Unix™, Linux™, and FreeBSD™.

A procedure executed by the central processing unit 1101 in the station 1100 in this embodiment is similar to the method procedures described in the embodiments shown in FIG.5 to FIG. 7. Details are not described herein again.

An embodiment of this application further provides a computer program product. The computer program product includes a computer software instruction. The computer software instruction may be loaded by a processor to implement the method procedures in the embodiments shown in FIG. 4 to FIG. 7.

An embodiment of this application further provides a computer-readable storage medium. The computer-readable storage medium is configured to store computer software instructions used by the foregoing access point, and the computer software instructions include a program designed for the access point.

An embodiment of this application further provides a computer-readable storage medium. The computer-readable storage medium is configured to store computer software instructions used by the foregoing station, and the computer software instructions include a program designed for the station.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, and an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A channel management method, comprising:
establishing, by an access point AP, a communication connection to a station STA; and
sending, by the AP, first channel configuration signaling to the STA, wherein the first channel configuration signaling is used to indicate the STA to perform data transmission on a first channel, and the first channel is a secondary channel of the AP.

2. The method according to claim 1, wherein before the sending, by the AP, first channel configuration signaling to the STA, the method further comprises:
receiving, by the AP, channel configuration information sent by the STA, wherein the channel configuration information is used to indicate that the STA supports in performing data transmission on the secondary channel of the AP, or the channel configuration information is used to indicate one or more channels supported by the STA, and the one or more channels supported by the STA comprise the first channel.

3. The method according to claim 1 or 2, wherein after the sending, by the AP, first channel configuration signaling to the STA, the method further comprises:
sending, by the AP, downlink data to the STA over the first channel.

4. The method according to any one of claims 1 to 3, wherein after the sending, by the AP, first channel configuration signaling to the STA, the method further comprises:
sending, by the AP, scheduling information to the STA over the first channel, wherein the scheduling information is used to indicate the STA to send uplink data.

5. The method according to any one of claims 1 to 4, wherein before the sending, by the AP, first channel configuration signaling to the STA, the method further comprises:
configuring, by the AP, the first channel based on a preset parameter, wherein the preset parameter comprises one or more of a quantity of STAs on a channel, a channel load, a channel duty cycle, an amount of sent data, or a bandwidth capability of a STA.

6. The method according to any one of claims 1 to 5, wherein after the sending, by the AP, first channel configuration signaling to the STA, the method further comprises:
configuring, by the AP, a second channel based on the preset parameter, wherein the second channel is a primary channel of the AP or a secondary channel of the AP; and
sending, by the AP, second channel configuration signaling to the STA, wherein the second channel configuration signaling is used to indicate the STA to switch to the second channel to perform data transmission.

7. The method according to any one of claims 1 to 6, wherein after the sending, by the AP, first channel configuration signaling to the STA, the method further comprises:
receiving, by the AP, a request message sent by the STA;
configuring, by the AP, a third channel for the STA based on the request message, wherein the third channel is a primary channel of the AP or a secondary channel of the AP; and
sending, by the AP, third channel configuration signaling to the STA, wherein the third channel configuration signaling is used to indicate the STA to switch to the third channel to perform data transmission.

8. The method according to claim 1, wherein the sending, by the AP, first channel configuration signaling to the STA comprises:
sending, by the AP, information about the first channel and first slot information to the STA, wherein the first slot information is used to indicate duration for which the STA performs data transmission on the first channel.

9. The method according to claim 8, wherein the sending, by the AP, first channel configuration signaling to the STA comprises:
sending, by the AP, the information about the first channel and second slot information to the STA, wherein the second slot information is used to indicate the duration for which the STA performs data transmission on the first channel and duration for which the STA performs data transmission on a primary channel of the AP.

10. The method according to claim 8, wherein the sending, by the AP, first channel configuration signaling to the STA comprises:
sending, by the AP, information about at least two channels and third slot information to the STA, wherein the at least two channels comprise the first channel, and the third slot information is used to indicate duration for which the STA performs data transmission on any one of the at least two channels.

11. A channel management method, comprising:
establishing, by a station STA, a communication connection to an access point AP;
receiving, by the STA, first channel configuration signaling sent by the AP; and
performing, by the STA, data transmission on a first channel based on the first channel configuration signaling, wherein the first channel is a secondary channel of the AP.

12. The method according to claim 11, wherein before the receiving, by the STA, first channel configuration signaling sent by the AP, the method further comprises:
sending, by the STA, channel configuration information to the AP, wherein the channel configuration information is used to indicate that the STA supports in performing data transmission on the secondary channel of the AP, or the channel configuration information is used to indicate one or more channels supported by the STA, and the one or more channels supported by the STA comprise the first channel.

13. The method according to claim 11 or 12, wherein the performing, by the STA, data transmission on a first channel based on the first channel configuration signaling comprises:
receiving, by the STA over the first channel, downlink data sent by the AP.

14. The method according to any one of claims 11 to 13, wherein the performing, by the STA, data transmission on a first channel based on the first channel configuration signaling comprises:
receiving, by the STA over the first channel, scheduling information sent by the AP; and
sending, by the STA, uplink data based on the scheduling information.

15. The method according to any one of claims 11 to 14, wherein after the receiving, by the STA, first channel configuration signaling sent by the AP, the method further comprises:
receiving, by the STA, second channel configuration signaling sent by the AP; and
switching, by the STA based on the second channel configuration signaling, to a second channel to perform data transmission, wherein the second channel is a primary channel of the AP or a secondary channel of the AP.

16. The method according to any one of claims 11 to 15, wherein after the receiving, by the STA, first channel configuration signaling sent by the AP, the method further comprises:
sending, by the STA, a request message to the AP, wherein the request message carries information about a third channel, and the third channel is a primary channel of the AP or a secondary channel of the AP; and
if the STA receives third channel configuration signaling sent by the AP, switching, by the STA, to the third channel to perform data transmission.

17. The method according to claim 11, wherein the receiving, by the STA, first channel configuration signaling sent by the AP comprises:
receiving, by the STA, information about the first channel and first slot information that are sent by the AP, wherein the first slot information is used to indicate duration for which the STA performs data transmission on the first channel.

18. The method according to claim 17, wherein the receiving, by the STA, first channel configuration signaling sent by the AP comprises:
receiving, by the STA, the information about the first channel and second slot information that are sent by the AP, wherein the second slot information is used to indicate the duration for which the STA performs data transmission on the first channel and duration for which the STA performs data transmission on a primary channel of the AP.

19. The method according to claim 17, wherein the receiving, by the STA, first channel configuration signaling sent by the AP comprises:
receiving, by the STA, information about at least two channels and third slot information that are sent by the AP, wherein the at least two channels comprise the first channel, and the third slot information is used to indicate duration for which the STA performs data transmission on any one of the at least two channels.

20. An access point AP, comprising:
a connection module, configured to establish a communication connection between the AP and a station STA; and
a sending module, configured to send first channel configuration signaling to the STA, wherein the first channel configuration signaling is used to indicate the STA to perform data transmission on a first channel, and the first channel is a secondary channel of the AP.

21. The AP according to claim 20, further comprising:
a receiving module, configured to receive, by the AP, channel configuration information sent by the STA, wherein the channel configuration information is used to indicate that the STA supports in performing data transmission on the secondary channel of the AP, or the channel configuration information is used to indicate one or more channels supported by the STA, and the one or more channels supported by the STA comprise the first channel.

22. The AP according to claim 20 or 21, wherein the sending module is further configured to:
send downlink data to the STA over the first channel.

23. The AP according to any one of claims 20 to 22, wherein the sending module is specifically configured to:
after the AP sends the first channel configuration signaling to the STA, send scheduling information to the STA over the first channel, wherein the scheduling information is used to indicate the STA to send uplink data.

24. The AP according to any one of claims 20 to 23, further comprising:
a configuration module, configured to: before the AP sends the first channel configuration signaling to the STA, configure the first channel based on a preset parameter, wherein the preset parameter comprises one or more of a quantity of STAs on a channel, a channel load, a channel duty cycle, an amount of sent data, or a bandwidth capability of a STA.

25. The AP according to any one of claims 20 to 24, wherein the configuration module is further configured to:
after the AP sends the first channel configuration signaling to the STA, configure a second channel based on the preset parameter, wherein the second channel is a primary channel of the AP or a secondary channel of the AP; and
the sending module is further configured to send second channel configuration signaling to the STA, wherein the second channel configuration signaling is used to indicate the STA to switch to the second channel to perform data transmission.

26. The AP according to any one of claims 20 to 25, wherein the receiving module is further configured to:
receive a request message sent by the STA;
the configuration module is further configured to configure a third channel for the STA based on the request message, wherein the third channel is a primary channel of the AP or a secondary channel of the AP; and
the sending module is further configured to send third channel configuration signaling to the STA, wherein the third channel configuration signaling is used to indicate the STA to switch to the third channel to perform data transmission.

27. The AP according to claim 20, wherein the sending module is specifically configured to:
send information about the first channel and first slot information to the STA, wherein the first slot information is used to indicate duration for which the STA performs data transmission on the first channel.

28. The AP according to claim 27, wherein the sending module is specifically configured to:
send the information about the first channel and second slot information to the STA, wherein the second slot information is used to indicate the duration for which the STA performs data transmission on the first channel and duration for which the STA performs data transmission on a primary channel of the AP.

29. The AP according to claim 27, wherein the sending module is specifically configured to:
send information about at least two channels and third slot information to the STA, wherein the at least two channels comprise the first channel, and the third slot information is used to indicate duration for which the STA performs data transmission on any one of the at least two channels.

30. A station STA, comprising:
a connection module, configured to establish a communication connection to an access point AP; and
a transceiver module, configured to receive first channel configuration signaling sent by the AP, wherein
the transceiver module is further configured to perform data transmission on a first channel based on the first channel configuration signaling, wherein the first channel is a secondary channel of the AP.

31. The STA according to claim 30, wherein the transceiver module is further configured to:
before the STA receives the first channel configuration signaling sent by the AP, send channel configuration information to the AP, wherein the channel configuration information is used to indicate that the STA supports in performing data transmission on the secondary channel of the AP, or the channel configuration information is used to indicate one or more channels supported by the STA, and the one or more channels supported by the STA comprise the first channel.

32. The STA according to claim 30 or 31, wherein the transceiver module is specifically configured to:
receive downlink data sent by the AP over the first channel.

33. The STA according to any one of claims 30 to 32, wherein the transceiver module is further configured to:
receive scheduling information sent by the AP over the first channel; and
send uplink data based on the scheduling information.

34. The STA according to any one of claims 30 to 33, wherein the transceiver module is further configured to:
receive second channel configuration signaling sent by the AP; and
switch, based on the second channel configuration signaling, to a second channel to perform data transmission, wherein the second channel is a primary channel of the AP or a secondary channel of the AP.

35. The STA according to any one of claims 30 to 34, wherein the transceiver module is further configured to:
send a request message to the AP, wherein the request message carries information about a third channel, and the third channel is a primary channel of the AP or a secondary channel of the AP; and
if the STA receives third channel configuration signaling sent by the AP, switch to the third channel to perform data transmission.

36. The STA according to claim 30, wherein the transceiver module is specifically configured to:
receive information about the first channel and first slot information that are sent by the AP, wherein the first slot information is used to indicate duration for which the STA performs data transmission on the first channel.

37. The STA according to claim 36, wherein the transceiver module is specifically configured to:
receive the information about the first channel and second slot information that are sent by the AP, wherein the second slot information is used to indicate the duration for which the STA performs data transmission on the first channel and duration for which the STA performs data transmission on a primary channel of the AP.

38. The STA according to claim 36, wherein the transceiver module is specifically configured to:
receive information about at least two channels and third slot information that are sent by the AP, wherein the at least two channels comprise the first channel, and the third slot information is used to indicate duration for which the STA performs data transmission on any one of the at least two channels.

39. A communications device, comprising:
a processor, a memory, an input/output device, and a bus, wherein
the processor, the memory, and the input/output device are separately connected to the bus;
the memory is configured to store a software instruction; and
the processor is configured to execute the instruction, to perform the following steps:
establishing a communication connection to a station STA; and
sending first channel configuration signaling to the STA, wherein the first channel configuration signaling is used to indicate the STA to perform data transmission on a first channel, and the first channel is a secondary channel of the AP.

40. A communications device, comprising:
a processor, a memory, an input/output device, and a bus, wherein
the processor, the memory, and the input/output device are separately connected to the bus;
the memory is configured to store a software instruction; and
the processor is configured to execute the instruction, to perform the following steps:
establishing a communication connection to an access point AP;
receiving first channel configuration signaling sent by the AP; and
performing data transmission on a first channel based on the first channel configuration signaling, wherein the first channel is a secondary channel of the AP.

41. A computer program product comprising an instruction, wherein when the computer program product is run on a computer, the computer is enabled to perform the method according to any one of claims 1 to 19.

42. A computer-readable storage medium, comprising an instruction, wherein when the instruction is run on a computer, the computer is enabled to perform the method according to any one of claims 1 to 19.
